# FASCICULE DE BREVET EUROPEEN

(11) **EP 0 720 661 B1**
(45) Date de publication et mention de la délivrance du brevet: **10.06.1998**
(21) Numéro de dépôt: 94926943.5
(22) Date de dépôt: 15.09.1994
(51) Int. Cl.: C22B 11/08, C22B 3/00

(54) **PROCEDE D'ELUTION DE METAUX PRECIEUX ADSORBES SUR DU CARBONE ACTIVE**
VERFAHREN ZUM ELUIEREN VON AN AKTIVKOHLE ADSORBIERTEN EDELMETALLEN
PROCESS FOR THE ELUTION OF PRECIOUS METALS ADSORBED ON ACTIVE CARBON

(30) Priorité: 21.09.1993 BE 9300987
(43) Date de publication de la demande: 10.07.1996
(73) Titulaire: UM Engineering S.A., B-1348 Louvain-La-Neuve (BE)
(72) Inventeur: HARVEY, Sarah, B-1348 Louvain-la-Neuve (BE); VAN LIERDE, André, B-1180 Bruxelles (BE); LOUIS, Pierre, Edouard, B-1180 Bruxelles (BE)
(74) Mandataire: Saelemaekers, Juul
(86) Numéro de dépôt international: EP9403091
(87) Numéro de publication internationale: WO9508651

(56) Documents cités:
- WO-A-90/00206
- WO-A-92/08812
- US-A- 3 271 135
- US-A- 5 073 354

## Description

La présente invention se rapporte à un procédé pour éluer de l'or et/ou de l'argent adsorbés sur du carbone activé par élution directe ou par élution avec prétrempage, l'élution directe comportant la mise en contact du carbone avec une solution éluante, contenant un cyanure et/ou une base et éventuellement un solvant organique, en des conditions telles que l'on décharge au moins partiellement le carbone en produisant ainsi un éluat aurifère et/ou argentifère, et l'élution avec prétrempage comportant la mise en contact du carbone avec une solution de prétrempage, contenant un cyanure et/ou une base et éventuellement un solvant organique, de manière à produire du carbone prétrempé plus apte à être élué et une solution de prétrempage usée, et la mise en contact du carbone prétrempé avec un éluant aqueux ou organique en des conditions telles que l'on décharge au moins partiellement le carbone prétrempé en produisant ainsi un éluat aurifère et/ou argentifère, la présence de cyanure dans la solution éluante ou la solution de prétrempage étant obligatoire lorsqu'on veut éluer de l'argent.
On connaît déjà de nombreux procédés de ce genre, notamment le procédé Zadra. le procédé Zadra sous pression et le procédé Zadra aux solvants organiques. qui travaillent tous par élution directe, et les procédés AARL et Micron Research qui font appel à un prétrempage avant élution.
Dans le procédé Zadra (Zadra, J.B. et al, 1952. A process for recovering gold and silver from activated carbon by leaching and electrolysis. U.S. Bur. Mines, Rep. Invest. No 4843) la solution éluante contient environ 10 g/l NaOH et 1 g/l NaCN. quoique ces concentrations peuvent varier d'une installation à une autre. La température d'élution varie entre 80 et 97°C et la durée entre 48 et 70 heures. Ce procédé présente l'avantage d'opérer à pression atmosphérique à des températures relativement modérées sans solvant inflammable. Le grand inconvénient est la durée excessive.
Dans le procédé Zadra sous pression (Ross J.R et ai. Pressure stripping gold from activated carbone. Paper presented at the Annual Conference, Society Mining Engineers AIME, Chicago IL, Feb 26 - March 1, 1973. 14pp.) une température d'élution supérieure à 100°C et une pression adéquate permettent de diminuer la durée de l'élution jusqu'à 24 voir même 10 heures. Ce temps d'élution est toutefois encore relativement long.
Pour ce qui concerne le procédé Zadra aux solvants organiques, les conditions suivantes peuvent être considérées comme idéales : solution éluante Zadra NaCN-NaOH avec 20 % en volume d'un alcool tel que l'éthanol ; durée de 6 à 8 heures ; température de 80 à 90°C (US-A-4, 208,378 et "Heinen, H.J. et al., 1976. Gold desorption from activated carbon with alkaline alcohol solution. In : Weiss, A., (Ed.), World Mining and Metals Technology, Vol. 1, A.I.M.E., New York, Chap. 33, pp. 551-564"). Le remplacement dans ce procédé de l'éthanol par un glycol moins inflammable va de pair avec une augmentation sensible de la durée d'élution ("Fast, J.L : Glycol stripping. A viable option for recovering gold from carbon. Engineering and Mining Journal, 1987, pp. 48-49). D'autres solvants, qui peuvent être utilisés, sont l'acétone et l'acétonitrile (Espiell, F. et al., 1988. Gold desorption from activated carbon with dilute NaOH-organic solvent mixtures. Hydrometallurgy, 19, pp. 321-333). Dans le procédé AARL, le carbone est trempé dans une solution à 2-3% NaCN et 2% NaOH pendant 30 minutes et l'élution proprement dite se fait à l'aide d'eau douce de très haute qualité à 110°C. Le cycle complet dure de 10 à 11h. ("Davidson, R.J. et al., 1977. Desorption of gold from activated carbon with deionised water. J. South Afr. Inst. Min. metall., 77 (12); pp. 254." et "Davidson, R.J. et al., 1979. Further studies on the elution of gold from activated carbon using water as the eluant. J. South Afr. Inst. Min. Metall., 79 (19) ; pp. 437-495.").
Dans le procédé Micron Research on prétrempe le carbone avec 0,5 à 1 bed volume de solution à 5% NaCN et 1% NaOH et on ajoute ensuite 0,5 bed volume de méthanol pur qui est reflué à travers le lit de carbone pendant 6 à 12h pour éluer l'or ("Muir, D.M. et al., 1985. Elution of gold from carbon by the Micron solvent distillation procedure. Hydrometallurgy, 14, pp. 151-169).
D'autres procédés connus concernent la mise en oeuvre de solutions éluantes et de solutions de prétrempage du type NaCN-NaOH à faible teneur p. ex. 3%, en alcool (voir respectivement US-A-4.968.346 et EP-A-0010367).

Il est évidemment souhaitable que l'on parvienne à réduire la durée et/ou la température d'élution dans chacun de ces procédés connus.
Le but de la présente invention est de procurer un procédé tel que défini ci-dessus, qui réalise cet objectif.

A cet effet, selon l'invention, lorsqu'on opère par élution directe, on ajoute à la solution éluante ou à une partie de celle-ci une quantité appropriée d'un agent réducteur approprié de manière à rendre cette solution ou cette partie de solution tellement réductrice que le potentiel de l'éluat soit d'au moins 50 mV et, de préférence, d'au moins 150 mV inférieur à un potentiel de référence, celui-ci étant le potentiel mesuré dans l'éluat que l'on obtient sans ajout de l'agent réducteur à la solution éluante , et, lorsqu'on opère par élution avec prétrempage, on ajoute à la solution de prétrempage une quantité appropriée d'un agent réducteur approprié de manière à rendre cette solution tellement réductrice que le potentiel de la solution de prétrempage usée soit d'au moins 100 mV et, de préférence, d'au moins 250 mV inférieur à un potentiel de référence, qui est le potentiel mesuré dans la solution de prétrempage usée que l'on obtient sans ajout de l'agent réducteur à la solution de prétrempage.
En effet, la demanderesse a trouvé qu'une augmentation substantielle, telle que définie ci-dessus, du pouvoir réducteur des solutions d'élution et de prétrempage utilisées jusqu'à présent fait s'accroître nettement la cinétique d'élution de l'or et de l'argent, comme il sera démontré plus loin.
Le procédé de l'invention peut donc être facilement appliqué dans les installations qui exploitent à l'heure actuelle les procédés connus. Lorsqu'il s'agit par exemple d'adapter au procédé de l'invention une installation existante du type Zadra, dans laquelle l'élution se fait par exemple avec 20 g/l NaOH et 3 g/l NaCN à 90°C, il suffit de mesurer le potentiel de l'éluat, de déterminer ensuite la nature et la quantité de l'agent réducteur à ajouter à la solution éluante pour que le potentiel de l'éluat baisse d'au moins 50 mV, et de continuer l'exploitation de l'installation avec la solution éluante à pouvoir réducteur accru, bien entendu en des conditions adaptées au pouvoir éluant accru de la solution éluante. Il va sans dire que dans cette procédure le potentiel de l'éluat doit être toujours mesuré à la même température, par exemple à 20°C, et au même pH. (Sous l'expression "le potentiel" utilisée dans la présente demande il faut entendre : le potentiel d'oxydo-réduction)

On peut utiliser comme agent réducteur le borohydrure de sodium, l'hydrazine sulfate, le chlorhydrate d'hydroxylamine et le formaldéhyde. On donne toutefois la préférence à l'hydrazine, qui est commercialisée en général sous forme de monohydrate, parce que ce réactif donne les meilleurs résultats, comme il ressort d'une série d'essais comparatifs dont les résultats sont consignés dans le tableau I ci-après. Ces essais ont été réalisés avec du carbone, chargé à 0,4 % d'or en laboratoire, dans des conditions de simulation batch du procédé Zadra, à savoir : 15 g de carbone pour 100 ml de solution à 5 g/l NaCN ; chauffage sous reflux avec agitation à 100°C ; durée de 1 heure à partir de l'ébullition, le réactif étant ajouté en une fois au début de l'essai.

**Tableau I :**

| **Comparaison de différents réducteurs** | | | | | |
|---|---|---|---|---|---|
| **Essai n°** | **NaCN g/l** | **Autre Réactif** | | | **Rendement Au%** |
| | | **Nom** | **Formule** | **Teneurs g/l** | |
| 1 | 5 | | | | 20,1 |
| 2 | 5 | Hydrazine monohydrate | N₂H₄.H₂O | 0,5 | 39,4 |
| 3 | 5 | " | | 1,0 | 46,2 |
| 4 | 5 | Borohydrure de sodium | NaBH₄ | 5 | 36,4 |
| 5 | 5 | " | | 1 | 31,3 |
| 6 | 5 | Hydrazine sulfate | N₂H₄.H₂SO₄ | 1 | 22,4 |
| 7 | 5 | " | | 5 | 29,8 |
| 8 | 5 | Chlorhydrate d'hydroxylamine | H₂NOH.HCl | 5 | 30,6 |
| 9 | 5 | " | | 1 | 21,2 |
| 10 | 5 | Formaldéhyde | HCHO | 1 | 14,8 |
| 11 | 5 | " | | 5 | 26,2 |
| 12 | 0 | Hydroxyde de sodium | NaOH | 5 | 15,6 |

En général, on effectuera l'élution directe en faisant passer un nombre de bed volumes approprié de la solution éluante à travers un lit du carbone à décharger contenu dans une colonne et en recueillant l'éluat à la sortie de cette colonne, comme cela se fait également dans les procédés d'élution directe de l'art antérieur. Lorsqu'on travaille de cette façon, il peut être utile de faire décroître la concentration de l'agent réducteur dans la solution éluante en fonction du temps et de supprimer éventuellement l'ajout d'agent réducteur dans les demiers bed volumes, ceci en vue de réduire la consommation d'agent réducteur. Il peut également être utile de recycler les fractions d'éluat pauvres en or et/ou à teneur appréciable en agent réducteur, ceci en vue de réduire davantage la consommation d'agent réducteur et de produire un éluat plus concentré en or. Toutefois, il peut également être indiqué de faire s'accroître la concentration de l'agent réducteur dans la solution éluante en fonction du temps et de supprimer éventuellement l'ajout d'agent réducteur dans les premiers bed volumes, notamment lorsqu'il importe que l'éluat ait toujours en substance la même concentration en métaux précieux. Dans ce même but, on peut également faire s'accroître la température de la solution éluante en fonction du temps, éventuellement en combinaison avec une augmentation de la concentration de l'agent réducteur.
Lorsqu'on opère par élution directe et que le carbone à traiter contient de l'or et pas d'argent, on peut utiliser une solution éluante ne contenant, outre l'agent réducteur, qu'une faible quantité d'OH⁻, de préférence au maximum 4,25 g/l OH⁻, sous la forme de NaOH, KOH ou base équivalente ; il peut toutefois être utile d'ajouter à cette solution une faible quantité de CN⁻, de préférence au maximum 2,70 g/l CN⁻, sous la forme de NaCN, KCN ou cyanure équivalent.
Lorsque le carbone à traiter contient de l'or et de l'argent, on peut utiliser une solution éluante ne contenant, outre l'agent réducteur, qu'une quantité de CN⁻ d'au moins 1,00g/l et une quantité d'OH⁻ de maximum 4,25 g/l, les teneurs préférentielles en CN⁻ et OH⁻ étant respectivement de ≥ 2,65 g/l et ≤ 2,13 g/l.
A noter toutefois que pour des raisons de sécurité le pH devrait être au moins égale à 9 en présence de cyanure.
Lorsque la solution éluante contient du cyanure, notamment ≥ 2,65 g/l de CN⁻, l'argent s'élue en général plus facilement que l'or, c'est-à-dire à plus basse température et/ou avec une solution éluante moins réductrice. Il est donc possible d'éluer sélectivement l'argent et l'or en ajustant le pouvoir réducteur et/ou la température de la solution éluante en fonction du temps de manière à recueillir la majeure partie de l'argent dans les premiers bed volumes et la majeure partie de l'or dans les autres bed volumes. Ceci facilitera la récupération ultérieure de ces métaux, par exemple la récupération de l'argent sous la forme de Ag₂S et la récupération de l'or sous la forme d'un dépôt cathodique. L'élution sélective de l'argent peut éventuellement être effectuée sans ajout d'agent réducteur à la solution éluante.

Lorsque le carbone à traiter contient des impuretés et/ou des radicaux oxydés, il peut être utile de "neutraliser" d'abord ceux-ci avec un réducteur bon marché tel que le formaldéhyde ou le sulfite de sodium avant de procéder à l'élution ou au prétrempage avec une solution contenant un réducteur plus coûteux tel que l'hydrazine monohydrate.

Dans un premier mode de réalisation du procédé de l'invention on utilise une solution standard d'élution NaCN-NaOH du type Zadra, à laquelle on a ajouté 0,05-10 g/l, de préférence 0,1-1 g/l d'hydrazine monohydrate, et on effectue l'élution sous pression à 110-130°C.

Dans un deuxième mode de réalisation du procédé de l'invention on utilise la solution du premier mode, mais on effectue l'élution à la pression atmosphérique à 40-100°C, de préférence à 60-100°C et le plus avantageusement à 80-100°C.
Dans un troisième mode de réalisation du procédé de l'invention on utilise une solution d'élution NaCN-NaOH-alcool (éthanol, butanol, ...) du type Zadra aux solvants organiques, à laquelle on a ajouté 0,05-10 g/l de préférence 0,1-0,5 g/l d'hydrazine monohydrate, et on élue à 80-90°C.
Dans ces trois modes de réalisation, on peut faire varier la concentration d'hydrazine dans la solution d'élution en fonction du temps et supprimer éventuellement l'ajout d'hydrazine soit dans les premiers bed volumes, soit dans les demiers. Dans un quatrième mode de réalisation du procédé de l'invention on utilise une solution de prétrempage NaCN-NaOH du type AARL ou Micron Research, à laquelle on a ajouté 5-20 g/l d'hydrazine monohydrate, et on effectue le prétrempage et l'élution comme cela se fait dans le procédé AARL ou Micron Research.

Il convient de noter que la présence d'hydrazine dans l'éluat n'empêche pas la récupération ultérieure de l'or par cémentation sur de la poudre de zinc, mais au contraire permet de limiter la consommation de poudre de zinc.

Une variante du procédé de l'invention consiste en ce qu'au lieu de faire un ajout d'agent réducteur à la solution éluante ou à la solution de prétrempage, on effectue l'élution ou le prétrempage dans le compartiment cathodique d'une cellule à diaphragmes, où un potentiel réducteur équivalent à celui créé par ledit ajout est obtenu en ajustant l'intensité de courant à travers la cellule.

Les avantages du procédé de l'invention seront maintenant illustrés par le description de deux séries d'essais comparatifs d'élution en batch. Ces essais sont basés sur un test standard ACIX utilisé classiquement en Afrique du Sud pour définir l'aptitude d'un carbone chargé à être élué dans un système industriel Zadra. Ce test consiste à soumettre 1 g de carbone chargé à une lixiviation à 100°C sous reflux durant une heure à l'aide de 200 ml d'une solution à 5 g/l NaCN.
Tous les essais ont été réalisés avec un carbone industriel chargé à 0,445% d'or et 0,37% d'argent.
Dans la première série d'essais on a déterminé la cinétique de l'élution de l'or et de l'argent par la solution standard à 5 g/l NaCN, une solution à 5 g/l NaCN et 0,5 g/l N₂H₄.H₂O et une solution à 5 g/l NaCN et 0,2 g/l N₂H₄.H₂O. Le carbone et la solution sont portés ensemble à l'ébullition sous reflux et la durée des essais est comptée à partir du moment où l'ébullition est atteinte.

Les conditions opératoires et les résultats de ces essais sont donnés au tableau II ci-après.

**Tableau II :**

| **Essais de simulation Zadra** | | | | | | |
|---|---|---|---|---|---|---|
| Masse carbone g | Durée min | Solutions d'élution | | | Rendements | |
| | | Volume ml | NaCN g/l | N₂H₄.H₂O g/l | Au % | Ag % |
| 1 | 10 | 200 | 5 | 0 | 37,5 | 63,4 |
| | 20 | | | | 44,8 | 71,1 |
| | 30 | | | | 61,7 | 82,5 |
| | 40 | | | | 59,6 | 84,4 |
| | 50 | | | | 64,4 | 90,1 |
| | 60 | | | | 77,0 | 91,4 |
| | 90 | | | | 80,2 | 100 |
| 1 | 10 | 200 | 5 | 0,5 | 71,7 | 87,6 |
| | 15 | | | | 74,4 | 93,9 |
| | 20 | | | | 82,8 | 93,9 |
| | 30 | | | | 87,6 | 98,3 |
| | 40 | | | | 92,8 | 100 |
| | 60 | | | | 97,6 | 100 |
| 1 | 10 | 200 | 5 | 0,2 | 57,0 | 81,2 |
| | 20 | | | | 64,9 | 87,6 |
| | 30 | | | | 72,3 | 88,2 |
| | 40 | | | | 87,6 | 97,7 |
| | 50 | | | | 89,7 | 100 |
| | 60 | | | | 98,6 | 100 |

Ces résultats montrent clairement que l'ajout d'hydrazine améliore considérablement l'élution de l'or: après 10 minutes d'élution, le rendement or passe en effet de 37,5% à respectivement 57,0 et 71,7% selon que l'ajout d'hydrazine monohydrate s'est élevé à 0,2 ou 0,5 g/l ; après 60 minutes plus de 97,5% sont élués, alors que sans hydrazine le rendement or ne dépasse pas 80,2% après 90 minutes. Pour l'argent il y a également un gain appréciable de la cinétique.

Dans la seconde série d'essais comparatifs on a examiné l'effet d'un ajout d'hydrazine sur le prétempage.
Le prétrempage a été réalisé pendant 15 minutes à la température ambiante avec 75 ml de solution pour 15 g de carbone. L'élution a été effectuée ensuite à l'aide de 100 ml de solution à 5 g/l NaCN, pendant 1 heure, à l'ébullition sous reflux. Le tableau III ci-après donne les conditions opératoires et les résultats des essais. Ils y sont comparés à ceux d'un essai d'élution directe, sans prétrempage, à l'aide d'une solution à 5 g/l NaCN.

**Tableau III :**

| **Essais d'élution avec prétrempage** | | | | | |
|---|---|---|---|---|---|
| Masse carbone g | 15 | 15 | 15 | 15 | 15 |
| Solution Prétrempage | | | | | |
| NaCN g/l | néant | 5,0 | 5,0 | 5,0 | 5,0 |
| N₂H₄.H₂O g/l | | 0,0 | 0,8 | 2,7 | 8,0 |
| Elution | | | | | |
| Volume ml | 100 | 100 | 100 | 100 | 100 |
| NaCN g/l | 5,0 | 5,0 | 5,0 | 5,0 | 5,0 |
| Rendement % Au | 15,2 | 16,2 | 20,4 | 30,9 | 50,5 |
| Ag | 51,9 | 53,2 | 59,1 | 69,3 | 85,5 |

Ces essais montrent que le prétrempage avec une solution contenant uniquement du cyanure ne permet aucune amélioration sensible des rendements d'élution or ou argent. Par contre, lorsque la solution de prétrempage contient en outre de l'hydrazine monohydrate, l'élution devient de plus en plus performante au fur et à mesure que le concentration de N₂H₄.H₂O augmente.

Les avantages du procédé de l'invention sont illustrés davantage par la description ci-après de cinq séries d'essais comparatifs d'élution en colonne.
Ces essais ont été faits dans les conditions générales suivantes :
- colonne ayant un volume utile de 1 litre (diamètre de 66mm, hauteur de 292mm).
- volume de carbone humide de 1l.
- débit de solution de 2 I/h, ce qui correspond à 2 bed volumes/h.

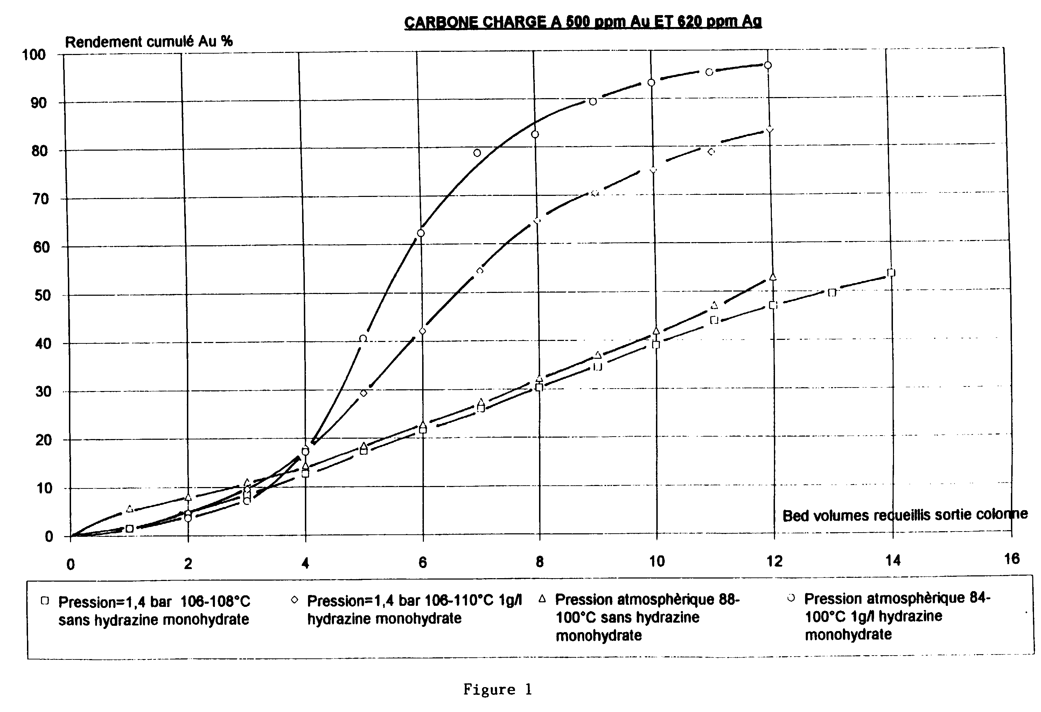

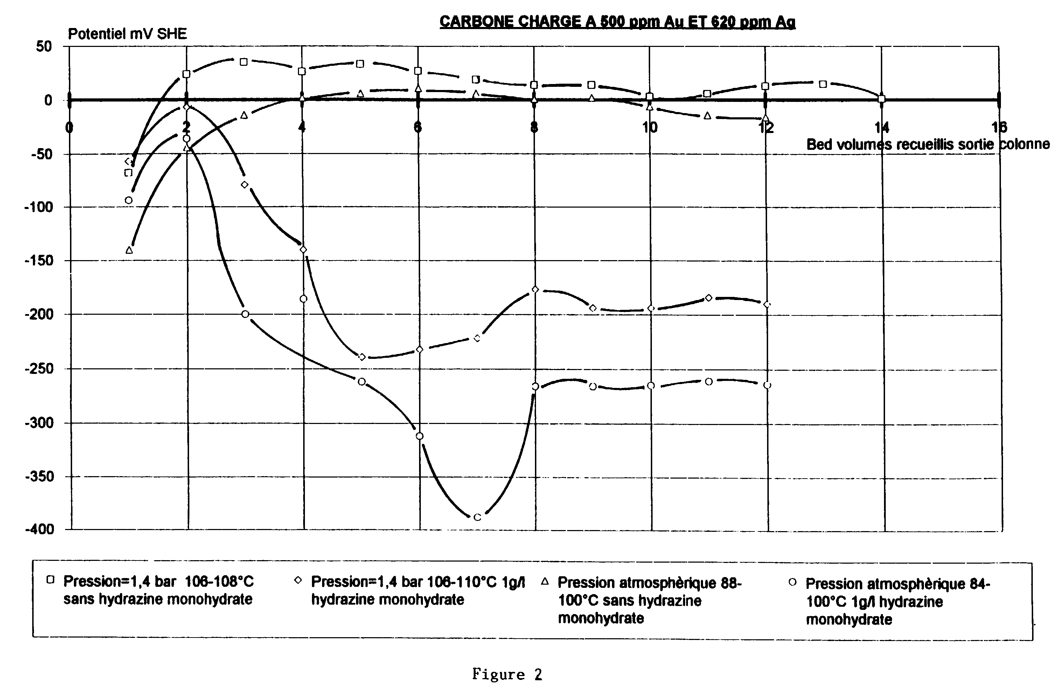

La première série d'essais a été réalisée avec un carbone industriel chargé à 500 ppm Au et 620 ppm Ag et avec une solution éluante à 10 g/l NaOH, 5 g/l NaCN et 0 ou 1 g/l d'hydrazine monohydrate. Deux essais ont eu lieu à pression atmosphérique vers 85-100°C et deux autres sous une pression de 1,4 bar vers 106-110°C chaque fois en absence et en présence de 1g/l d'hydrazine monohydrate.
On a déterminé le rendement d'élution Au en fonction du nombre de bed volumes et mesuré le potentiel de chaque bed volume d'éluat à 20°C.
L'évolution du rendement d'élution Au est donnée à la figure 1 et celle du potentiel à la figure 2.

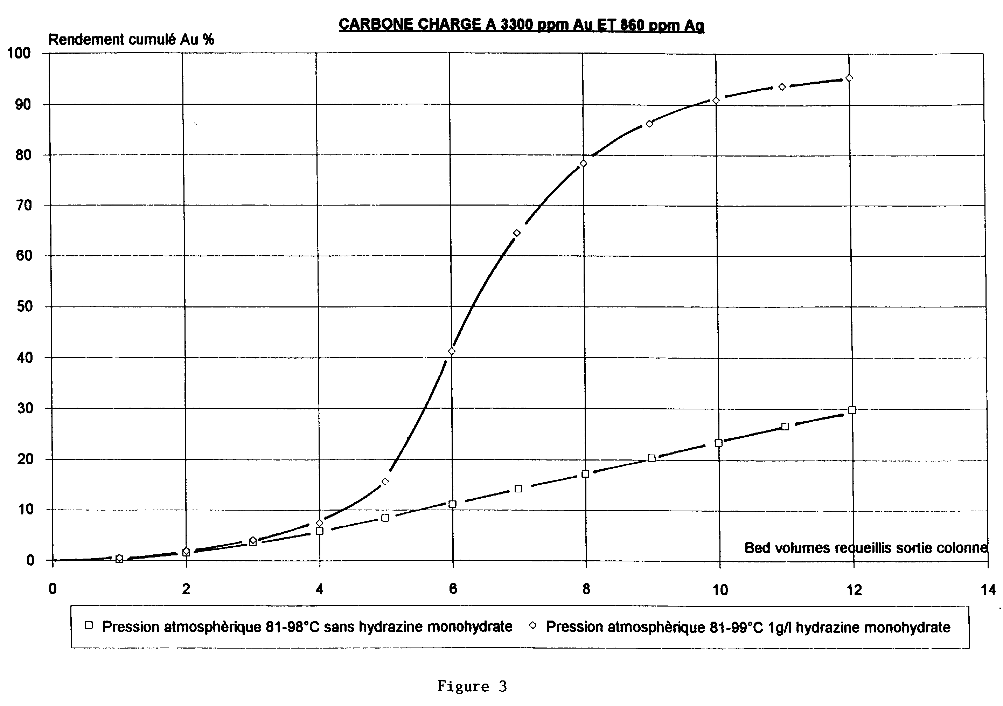

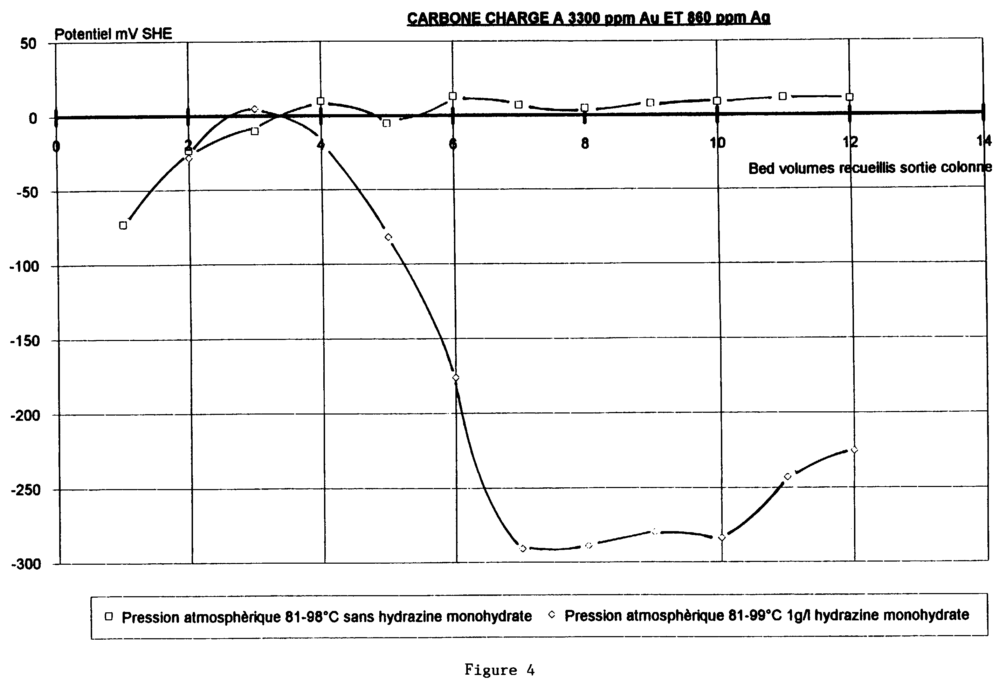

La deuxième série d'essais a été réalisée à pression atmosphérique vers 81-99°C avec un carbone chargé à 3300 ppm Au et 860 ppm Ag et avec la solution éluante de la première série.
On a déterminé le rendement Au et mesuré le potentiel comme dans la première série d'essais : l'évolution du rendement d'élution Au est donnée à la figure 3 et celle du potentiel à la figure 4.

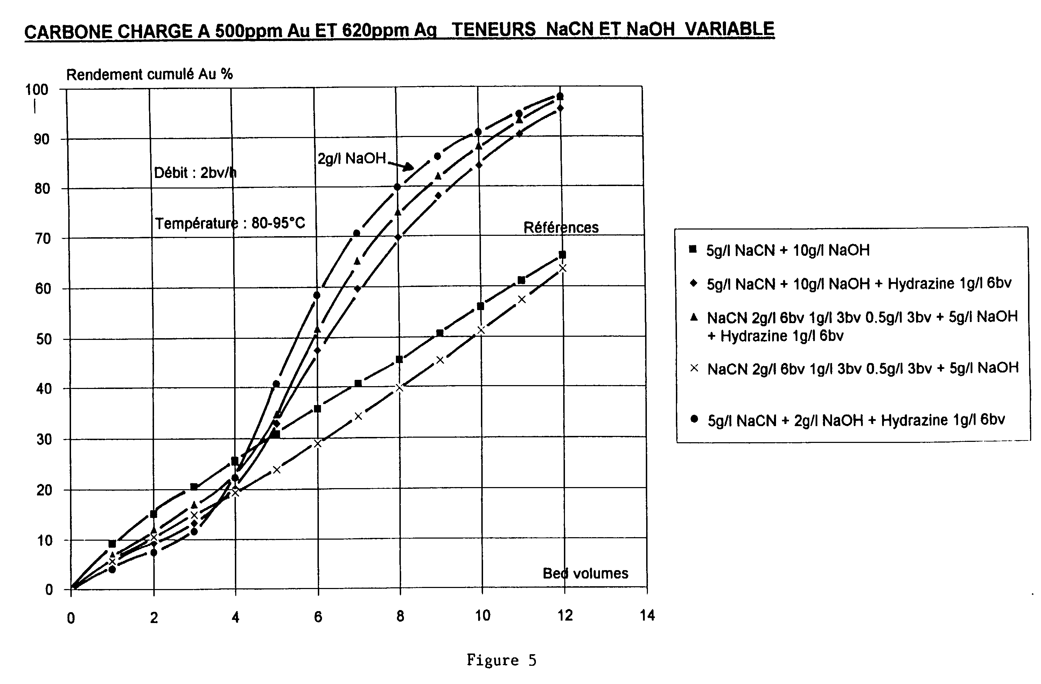

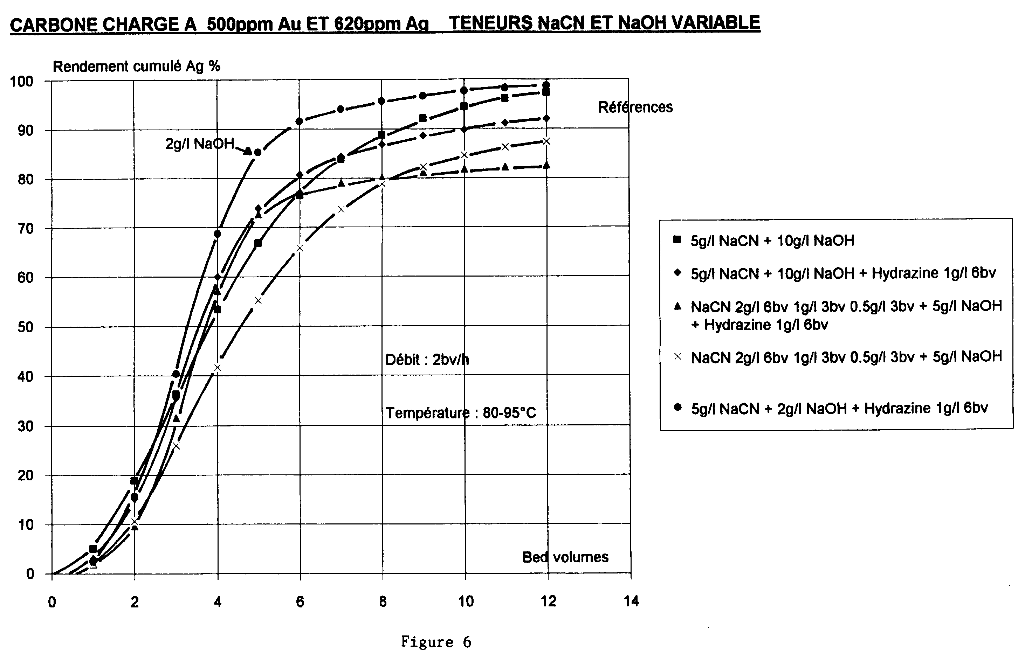

La troisième série d'essais a été réalisée avec un carbone industriel chargé à 500 ppm Au et 620 ppm Ag et avec une solution éluante à teneurs variables en NaOH et NaCN et contenant soit 0 g/l soit 1 g/l d'hydrazine monohydrate pendant les 6 premiers bed volumes. Les 5 essais ont eu lieu à pression atmosphérique vers 85-100°C. On a déterminé les rendements d'élution Au et Ag en fonction du nombre de bed volumes. Les résultats sont donnés aux figures 5 et 6.

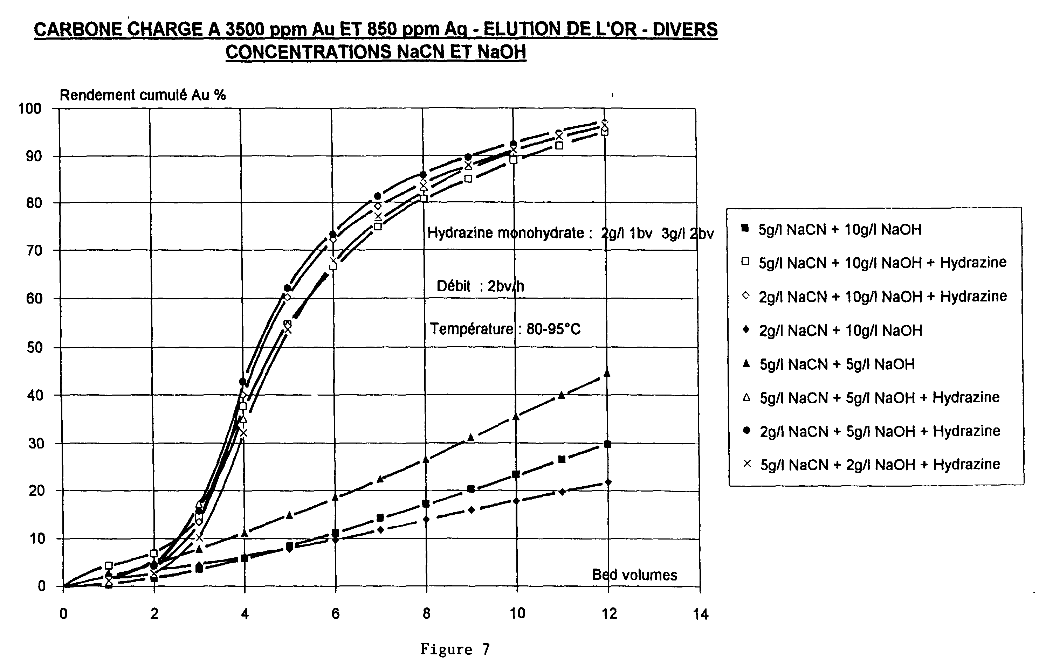

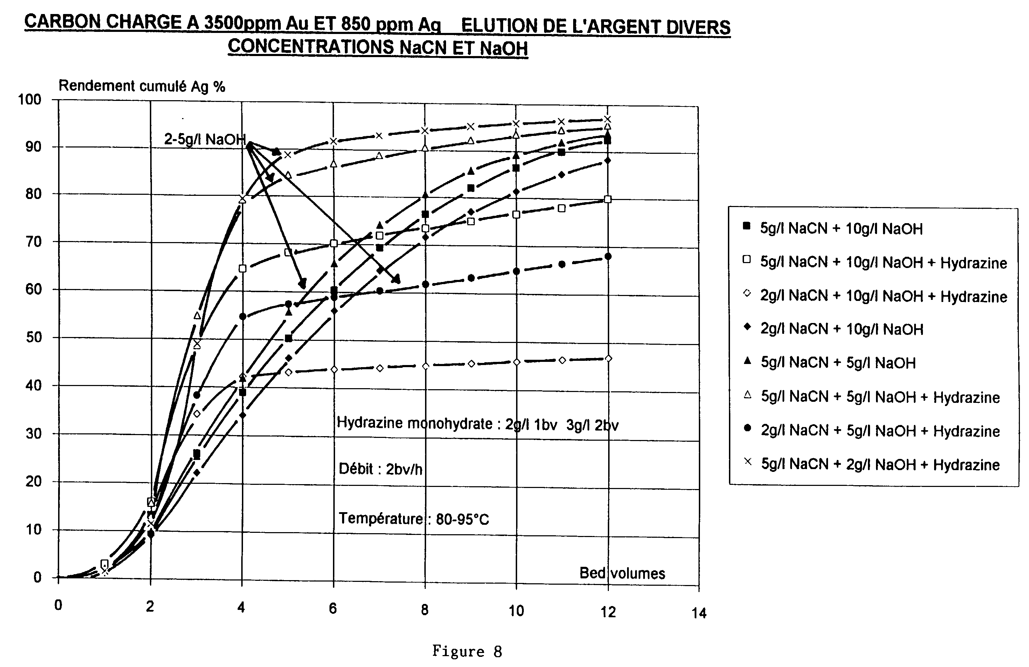

La quatrième série d'essais a été réalisée avec un carbone industriel chargé à 3300 ppm Au et 860 ppm Ag. Les élutions ont eu lieu vers 80-95°C à pression atmosphérique avec une solution éluante à teneurs variables en NaOH et NaCN et contenant soit 0 g/l, soit 2 g/l d'hydrazine monohydrate pendant le premier bed volume et 3 g/l pendant les deux bed volumes suivants.
On a déterminé les rendements d'élution Au et Ag comme dans la troisième série d'essais et ces résultats sont donnés aux figures 7 et 8.

La cinquième série d'essais a été réalisée avec un carbone industriel chargé à 3500 ppm Au et 850 ppm Ag. Quatre essais ont eu lieu à la pression atmosphérique : deux vers 50-75°C et deux autres vers 80-95°C, avec une solution éluante à 10 g/l NaOH, 5 g/l NaCN et soit 0 g/l, soit 2 g/l d'hydrazine monohydrate pendant le premier bed volume et 3 g/l pendant les deux bed volumes suivants.

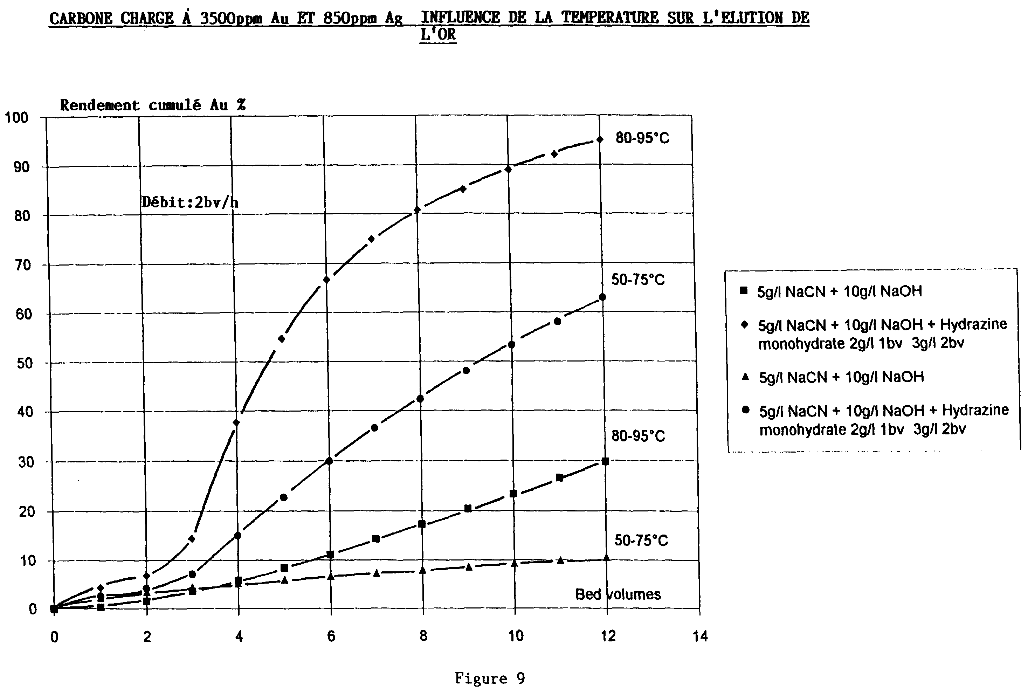

On a déterminé le rendement d'élution Au en fonction du nombre de bed volumes. Les résultats sont donnés à la figure 9.

Ces résultats illustrent à nouveau l'intérêt de l'ajout de l'hydrazine monohydrate à la solution d'élution. Cet ajout est plus efficace à plus basse température, où le pouvoir réducteur de la solution est plus élevé. En présence d'argent il est avantageux d'utiliser des solutions éluantes à faible teneur en NaOH, de préférence des solutions à pH aux alentours de 9.

## Revendications

1. Procédé pour éluer de l'or adsorbé sur du carbone activé par élution directe, comportant la mise en contact du carbone avec une solution éluante, contenant un cyanure et/ou une base et éventuellement un solvant organique, en des conditions telles que l'on décharge au moins partiellement le carbone en produisant ainsi un éluat aurifère, ce procédé étant caractérisé en ce qu'on ajoute à la solution éluante ou à une partie de celle-ci une quantité appropriée d'un agent réducteur approprié de manière à rendre cette solution ou cette partie de solution tellement réductrice que le potentiel de l'éluat soit d'au moins 50 mV et de préférence d'au moins .150 mV inférieur à un potentiel de référence, celui-ci étant le potentiel mesuré dans l'éluat que l'on obtient sans ajout de l'agent réducteur à la solution éluante.

2. Procédé pour éluer de l'argent adsorbé sur du carbone activé par élution directe, comportant la mise en contact du carbone avec une solution éluante, contenant un cyanure et éventuellement une base et/ou un solvant organique, en des conditions telles que l'on décharge au moins partiellement le carbone en produisant ainsi un éluat argentifère, ce procédé étant caractérisé en ce qu'on ajoute à la solution éluante ou à une partie de celle-ci une quantité appropriée d'un agent réducteur approprié de manière à rendre cette solution ou cette partie de solution tellement réductrice que le potentiel de l'éluat soit d'au moins 50 mV et de préférence d'au moins 150 mV inférieur à un potentiel de référence, celui-ci étant le potentiel mesuré dans l'éluat que l'on obtient sans ajout de l'agent réducteur à la solution éluante.

3. Procédé pour éluer de l'or adsorbé sur du carbone activé par élution avec prétrempage, comportant la mise en contact du carbone avec une solution de prétrempage, contenant un cyanure et/ou une base et éventuellement un solvant organique, de manière à produire du carbone prétrempé plus apte à être élué et une solution de prétrempage usée, et la mise en contact du carbone prétrempé avec un éluant aqueux ou organique en des conditions telles que l'on décharge au moins partiellement le carbone prétrempé en produisant ainsi un éluat aurifère, ce procédé étant caractérisé en ce qu'on ajoute à la solution de prétrempage une quantité appropriée d'une agent réducteur approprié de manière à rendre cette solution tellement réductrice que le potentiel de la solution de prétrempage usée soit d'au moins 100 mV et de préférence d'au moins 250 mV inférieur à un potentiel de référence, qui est le potentiel mesuré dans la solution de prétrempage usée que l'on obtient sans ajout de l'agent réducteur à la solution de prétrempage.

4. Procédé pour éluer de l'argent adsorbé sur du carbone activé par élution avec prétrempage, comportant la mise en contact du carbone avec une solution de prétrempage, contenant un cyanure et éventuellement une base et/ou un solvant organique, de manière à produire du carbone prétrempé plus apte à être élué et une solution de prétrempage usée, et la mise en contact du carbone prétrempé avec un éluant aqueux ou organique en des conditions telles que l'on décharge au moins partiellement le carbone prétrempé en produisant ainsi un éluat argentifère, ce procédé étant caractérisé en ce qu'on ajoute à la solution de prétrempage une quantité appropriée d'une agent réducteur approprié de manière à rendre cette solution tellement réductrice que le potentiel de la solution de prétrempage usée soit d'au moins 100 mV et de préférence d'au moins 250 mV inférieur à un potentiel de référence, qui est le potentiel mesuré dans la solution de prétrempage usée que l'on obtient sans ajout de l'agent réducteur à la solution de prétrempage.

5. Procédé selon la revendication 1, 2, 3 ou 4, caractérisé en ce qu'on utilise en tant qu'agent réducteur l'hydrazine monohydrate, le borohydrure de sodium, l'hydrazine sulfate, le chlorhydrate d'hydroxylamine ou le formaldéhyde.

6. Procédé selon la revendication 1 ou 2, caractérisé en ce qu'on utilise une solution éluante contenant 0,05-10 g/l, de préférence 0,1-1 g/l d'hydrazine monohydrate.

7. Procédé selon la revendication 5 ou 6, caractérisé en ce qu'on utilise une solution éluante exempte de solvants organiques et on effectue l'élution à la pression atmosphérique à 40-100°C, de préférence à 80-100°C.

8. Procédé selon l'une quelconque des revendications 1, 5, 6 et 7, caractérisé en ce que le carbone activé est substantiellement exempt d'argent et qu'on utilise une solution éluante ne contenant, outre l'agent réducteur, qu'une faible quantité d'OH⁻, de préférence une quantité de maximum 4,25 g/l OH⁻, sous la forme de NaOH, KOH ou base équivalente.

9. Procédé selon la revendication 8, caractérisé en ce qu'on ajoute à la solution éluante une faible quantité de CN⁻, de préférence une quantité de maximum 2,70 g/l CN⁻, sous la forme de NaCN, KCN ou cyanure équivalent.

10. Procédé selon l'une quelconque des revendications 1, 2, 5, 6 et 7, caractérisé en ce que le carbone activé contient de l'or et de l'argent et qu'on utilise une solution éluante ne contenant, outre l'agent réducteur, qu'une faible quantité d'OH⁻ de maximum 4,25 g/l sous la forme de NaOH, KOH ou base équivalente et au moins 1,00 g/l CN⁻ sous la forme de NaCN, KCN ou cyanure équivalent, les teneurs préférentielles en OH⁻ et CN⁻ étant respectivement ≤ 2,13 g/l et ≥ 2,65 g/l.

11. Procédé selon la revendication 9 ou 10, caractérisé en ce que le pH de la solution éluante est au moins égal à 9.

12. Procédé selon l'une quelconque des revendications 1-2 et 5-11, caractérisé en ce qu'on effectue l'élution directe en faisant passer une quantité appropriée de la solution éluante à travers un lit du carbone contenu dans une colonne et en recueillant l'éluat à la sortie de cette colonne.

13. Procédé selon la revendication 12, caractérisé en ce qu'on fait varier la concentration d'agent réducteur dans la solution éluante en fonction du temps.

14. Procédé selon la revendication 13, caractérisé en ce que la concentration de l'agent réducteur dans la solution éluante est nulle soit dans la phase initiale, soit dans la phase finale de l'élution.

15. Procédé selon la revendication 3, 4 ou 5, caractérisé en ce qu'on utilise une solution de prétrempage contenant 5-20 g/l d'hydrazine monohydrate.

16. Procédé selon la revendication 6 ou 15, caractérisé en ce que le carbone activé contient des impuretés et/ou des radicaux oxydés et qu'on met le carbone activé en contact avec un réducteur autre que l'hydrazine monohydrate avant de procéder à l'élution directe ou au prétrempage.

17. Procédé selon la revendication 16, caractérisé en ce qu'on met le carbone activé en contact avec une solution de formaldéhyde ou de sulfite de sodium.

18. Variante du procédé selon l'une quelconque des revendications 1-15, caractérisée en ce qu'au lieu de faire un ajout d'agent réducteur à la solution éluante ou à la solution de prétrempage, on effectue l'élution ou le prétrempage dans le compartiment cathodique d'une cellule à diaphragmes, où un potentiel réducteur équivalent à celui crée par ledit ajout est obtenu en ajustant l'intensité de courant à travers la cellule.

## Patentansprüche

1. Verfahren zum Eluieren von auf Aktivkohle adsorbiertem Gold durch direkte Elution, bei dem man die Kohle mit einer ein Cyanid und/oder eine Base und gegebenenfalls ein organisches Lösungsmittel enthaltenden Eluierlösung unter solchen Bedingungen in Berührung bringt, daß die Kohle zumindest teilweise unter Erzeugung eines goldhaltigen Eluats entladen wird, dadurch gekennzeichnet, daß man der Eluierlösung oder einem Anteil von dieser eine geeignete Menge eines zweckmäßigen Reduktionsmittels zusetzt, damit diese Lösung oder deren Anteil so stark reduzierend wird, daß das Potential des Eluats mindestens 50 mV und vorzugsweise mindestens 150 mV unter einem Bezugspotential liegt, welches in dem Eluat gemessen wird, das man ohne Zusatz des Reduktionsmittels zu der Eluierlösung erhält.

2. Verfahren zum Eluieren von auf Aktivkohle adsorbiertem Silber durch direkte Elution, bei dem man die Kohle mit einer ein Cyanid und gegebenenfalls eine Base und/oder ein organisches Lösungsmittel enthaltenden Eluierlösung unter solchen Bedingungen in Berührung bringt, daß die Kohle zumindest teilweise unter Erzeugung eines silberhaltigen Eluats entladen wird, dadurch gekennzeichnet, daß man der Eluierlösung oder einem Anteil von dieser eine geeignete Menge eines zweckmäßigen Reduktionsmittels zusetzt, damit diese Lösung oder deren Anteil so stark reduzierend wird, daß das Potential des Eluats mindestens 50 mV und vorzugsweise mindestens 150 mV unter einem Bezugspotential liegt, welches in dem Eluat gemessen wird, das man ohne Zusatz des Reduktionsmittels zu der Eluierlösung erhält.

3. Verfahren zum Eluieren von auf Aktivkohle adsorbiertem Gold durch Elution mit Vorwaschung, bei dem man die Kohle mit einer ein Cyanid und/oder eine Base und gegebenenfalls ein organisches Lösungsmittel enthaltenden Vorwaschlösung unter Bildung einer zum Eluieren besser geeigneten vorgewaschenen Kohle und einer gebrauchten Vorwaschlösung in Berührung bringt und die vorgewaschene Kohle mit einem wäßrigen oder organischen Eluiermittel unter solchen Bedingungen in Berührung bringt, daß die vorgewaschene Kohle zumindest teilweise unter Erzeugung eines goldhaltigen Eluats entladen wird, dadurch gekennzeichnet, daß man der Vorwaschlösung eine geeignete Menge eines zweckmäßigen Reduktions-mittels zusetzt, damit diese Lösung so stark reduzierend wird, daß das Potential der verwendeten Vorwaschlösung mindestens 100 mV und vorzugsweise mindestens 250 mV unter einem Bezugspotential liegt, welches in der verwendeten Vorwaschlösung gemessen wird, die man ohne Zusatz des Reduktions-mittels zu der Vorwaschlösung erhält.

4. Verfahren zum Eluieren von auf Aktivkohle adsorbiertem Silber durch Elution mit Vorwaschen, bei dem man die Kohle mit einer ein Cyanid und gegebenenfalls eine Base und/oder ein organisches Lösungsmittel enthaltenden Vorwaschlösung unter Bildung einer zum Eluieren besser geeigneten vorgewaschenen Kohle und einer gebrauchten Vorwaschlösung in Berührung bringt und die vorgewaschene Kohle mit einem wäßrigen oder organischen Eluiermittel unter solchen Bedingungen in Berührung bringt, daß die vorgewaschene Kohle zumindest teilweise unter Erzeugung eines silberhaltigen Eluats entladen wird, dadurch gekennzeichnet, daß man der Vorwaschlösung eine geeignete Menge eines zweckmäßigen Reduktions-mittels zusetzt, damit diese Lösung so stark reduzierend wird, daß das Potential der verwendeten Vorwaschlösung mindestens 100 mV und vorzugsweise mindestens 250 mV unter einem Bezugspotential liegt, welches in der verwendeten Vorwaschlösung gemessen wird, die man ohne Zusatz des Reduktions-mittels zu der Vorwaschlösung erhält.

5. Verfahren nach Anspruch 1, 2, 3 und 4, dadurch gekennzeichnet, daß man als Reduktionsmittel Hydrazinmonohydrat, Natriumborhydrid, Hydrazinsulfat, Hydroxylaminhydrochlorid oder Formaldehyd einsetzt.

6. Verfahren nach Anspruch 1 oder 2, dadurch gekennzeichnet, daß man eine 0,05-10 g/l, vorzugsweise 0,1-1 g/l, Hydrazinmonohydrat enthaltende Eluierlösung einsetzt.

7. Verfahren nach Anspruch 5 oder 6, dadurch gekennzeichnet, daß man eine von organischen Lösungsmitteln freie Eluierlösung einsetzt und die Elution bei Atmosphärendruck und bei 40-100°C, vorzugsweise bei 80-100°C, durchführt.

8. Verfahren nach einem der Ansprüche 1, 5, 6 und 7, dadurch gekennzeichnet, daß die Aktivkohle weitgehend silberfrei ist und daß man eine Eluierlösung einsetzt, die außer dem Reduktionsmittel nur eine kleine Menge OH⁻ enthält, vorzugsweise eine maximale Menge von 4,25 g/l OH⁻ in Form von NaOH, KOH oder einer äquivalenten Base.

9. Verfahren nach Anspruch 8, dadurch gekennzeichnet, daß man der Eluierlösung eine kleine Menge CN⁻ zusetzt, vorzugsweise eine maximale Menge von 2,70 g/l CN⁻ in Form von NaCn, KCN oder einem äquivalenten Cyanid.

10. Verfahren nach einem der Ansprüche 1, 2, 5, 6 und 7, dadurch gekennzeichnet, daß die Aktivkohle Gold und Silber enthält und daß man eine Eluierlösung einsetzt, die außer dem Reduktionsmittel nur eine kleine Menge OH⁻ von höchstens 4,25 g/l in Form von NaOH, KOH oder einer äquivalenten Base und mindestens 1,00 g/l CN⁻ in Form von NaCN, KCN oder einem äquivalenten Cyanid enthält, wobei die bevorzugten Gehalte an OH⁻ bzw. CN⁻ ≤ 2,13 g/l bzw. ≥ 2,65 g/l betragen.

11. Verfahren nach Anspruch 9 oder 10, dadurch gekennzeichnet, daß der pH der Eluierlösung mindestens gleich 9 ist.

12. Verfahren nach einem der Ansprüche 1-2 und 5-11, dadurch gekennzeichnet, daß man die direkte Elution durchführt, indem man eine geeignete Menge der Eluierlösung durch ein in einer Kolonne enthaltenes Kohlebett fließen läßt und das Eluat am Ausgang aus dieser Kolonne auffängt.

13. Verfahren nach Anspruch 12, dadurch gekennzeichnet, daß man die Konzentration des Reduktions-mittels in der Eluierlösung zeitabhängig variiert.

14. Verfahren nach Anspruch 13, dadurch gekennzeichnet, daß die Konzentration des Reduktionsmittels in der Eluierlösung sowohl in der Anfangsphase als auch in der Schlußphase der Elution null ist.

15. Verfahren nach Anspruch 3, 4 oder 5, dadurch gekennzeichnet, daß man eine 5-20 g/l Hydrazinmonohydrat enthaltende Vorwaschlösung einsetzt.

16. Verfahren nach Anspruch 6 oder 15, dadurch gekennzeichnet, daß die Aktivkohle Verunreinigungen und/oder oxidierte Reste enthält und daß man die Aktivkohle mit einem anderen Reduktionsmittel als Hydrazinmonohydrat in Berührung bringt, bevor man die direkte Elution oder die Elution mit Vorwaschung vornimmt.

17. Verfahren nach Anspruch 16, dadurch gekennzeichnet, daß man die Aktivkohle mit einer Formaldehyd- oder Natriumsulfitlösung in Berührung bringt.

18. Variante des Verfahrens nach einem der Ansprüche 1-15, dadurch gekennzeichnet, daß man anstelle des Zusatzes eines Reduktionsmittels zu der Eluierlösung oder der Vorwaschlösung die Elution oder die Vorwaschung im Kathodenabteil einer Diaphragmazelle durchführt, wo man ein dem durch besagten Zusatz erzeugten äquivalentes Reduktionspotential durch Einstellung der Stromstärke durch die Zelle erhält.

## Claims

1. Process for eluting gold which is adsorbed on activated carbon by direct elution, comprising bringing the carbon into contact with an eluent solution, containing a cyanide and/or a base and optionally an organic solvent, in conditions such that the carbon is at least partially stripped, thus producing a gold-bearing eluate, this process being characterized in that an appropriate quantity of an appropriate reducing agent is added to the eluent solution or to a part of the latter so as to make this solution or part of solution so reductive that the potential of the eluate is at least 50 mV and, preferably, at least 150 mV lower than a reference potential, the latter being the potential measured in the eluate which is obtained without addition of the reducing agent to the eluent solution.

2. Process for eluting silver which is adsorbed on activated carbon by direct elution, comprising bringing the carbon into contact with an eluent solution containing a cyanide and optionally a base and/or an organic solvent, in conditions such that the carbon is at least partially stripped, thus producing a silver-bearing eluate, this process being characterized in that an appropriate quantity of an appropriate reducing agent is added to the eluent solution or to a part of the latter so as to make this solution or part of solution so reductive that the potential of the eluate is at least 50 mV and, preferably, at least 150 mV lower than a reference potential, the latter being the potential measured in the eluate which is obtained without addition of the reducing agent to the eluent solution.

3. Process for eluting gold which is adsorbed on activated carbon by elution with presoaking, comprising bringing the carbon into contact with a presoaking solution containing a cyanide and/or a base and optionally an organic solvent, so as to produce presoaked carbon which is more suited to being eluted and a spent presoaking solution, and bringing the presoaked carbon into contact with an aqueous or organic eluent in conditions such that the presoaked carbon is at least partially stripped, thus producing a gold-bearing eluate, this process being characterized in that an appropriate quantity of an appropriate reducing agent is added to the presoaking solution so as to make this solution so reductive that the potential of the spent presoaking solution is at least 100 mV and preferably at least 250 mV lower than a reference potential, which is the potential measured in the spent presoaking solution which is obtained without addition of the reducing agent to the presoaking solution.

4. Process for eluting silver which is adsorbed on activated carbon by elution with presoaking, comprising bringing the carbon into contact with a presoaking solution containing a cyanide and optionally a base and/or an organic solvent, so as to produce presoaked carbon which is more suited to being eluted and a spent presoaking solution, and bringing the presoaked carbon into contact with an aqueous or organic eluent in conditions such that the presoaked carbon is at least partially stripped, thus producing a silver-bearing eluate, this process being characterized in that an appropriate quantity of an appropriate reducing agent is added to the presoaking solution so as to make this solution so reductive that the potential of the spent presoaking solution is at least 100 mV and preferably at least 250 mV lower than a reference potential which is the potential measured in the spent presoaking solution which is obtained without addition of the reducing agent to the presoaking solution.

5. Process according to Claim 1, 2, 3 or 4, characterized in that hydrazine monohydrate, sodium borohydride, hydrazine sulphate, hydroxylamine hydrochloride or formaldehyde is employed as reducing agent.

6. Process according to Claim 1 or 2, characterized in that an eluent solution is employed containing 0.05-10 g/l, preferably 0.1-1 g/l of hydrazine monohydrate.

7. Process according to Claim 5 or 6, characterized in that an eluent solution free from organic solvents is employed and the elution is performed at atmospheric pressure at 40-100°C, preferably at 80-100°C.

8. Process according to any one of Claims 1, 5, 6 and 7, characterized in that the activated carbon is substantially free from silver and in that an eluent solution is employed containing, besides the reducing agent, only a small quantity of OH⁻, preferably not exceeding 4.25 g/l OH⁻, in the form of NaOH, KOH or an equivalent base.

9. Process according to Claim 8, characterized in that a small quantity of CN⁻,preferably not exceeding 2.70 g/l CN⁻, in the form of NaCN, KCN or an equivalent cyanide is added to the eluent solution.

10. Process according to any one of Claims 1, 2, 5, 6 and 7, characterized in that the activated carbon contains gold and silver and in that an eluent solution is employed containing, besides the reducing agent, only a small quantity of OH⁻ not exceeding 4.25 g/l in the form of NaOH, KOH or an equivalent base and at least 1.00g/l CN⁻ in the form of NaCN, KCN or an equivalent cyanide, the preferential OH⁻ and CN⁻ contents being ≤ 2.13 g/l and ≥ 2.65 g/l respectively.

11. Process according to Claim 9 or 10, characterized in that the pH of the eluent solution is at least equal to 9.

12. Process according to any one of Claims 1-2 and 5-11, characterized in that the direct elution is performed by passing an appropriate quantity of the eluent solution through a carbon bed contained in a column and by collecting the eluate at the exit of this column.

13. Process according to Claim 12, characterized in that the concentration of the reducing agent in the eluent solution is varied as a function of time.

14. Process according to Claim 13, characterized in that the concentration of the reducing agent in the eluent solution is nil either in the initial stage or in the final stage of the elution.

15. Process according to Claims 3, 4 or 5, characterized in that a presoaking solution containing 5-20 g/l of hydrazine monohydrate is employed.

16. Process according to Claims 6 or 15, characterized in that the activated carbon contains oxidized radicals and/or impurities and in that the activated carbon is brought into contact with a reducing agent other than hydrazine monohydrate before undertaking the direct elution or the presoaking.

17. Process according to Claim 16, characterized in that the activated carbon is brought into contact with a solution of formaldehyde or of sodium sulphite.

18. Variant of the process according to any one of Claims 1-15, characterized in that instead of adding reducing agent to the eluent solution or to the presoaking solution, the elution or the presoaking is performed in the cathode compartment of a cell containing diaphragms, where a reducing potential equivalent to that created by the said addition is obtained by adjusting the current intensity through the cell.
